**Europäisches Patentamt**

**European Patent Office**

**Office européen des brevets**

(19)

(11) Numéro de publication: **0 165 165**
**B1**

(12) **FASCICULE DE BREVET EUROPÉEN**

(45) Date de publication du fascicule du brevet:
19.04.89

(51) Int. Cl.⁴: **G 07 C 1/30**

(21) Numéro de dépôt: **85401074.1**

(22) Date de dépôt: **31.05.85**

(54) Disque de stationnement électronique.

(30) Priorité: **01.06.84 FR 8408692**

(43) Date de publication de la demande:
**18.12.85 Bulletin 85/51**

(45) Mention de la délivrance du brevet:
**19.04.89 Bulletin 89/16**

(84) Etats contractants désignés:
**AT BE CH DE GB IT LI LU NL SE**

(56) Documents cité:
**EP-A-0 034 570**
**CH-A-640 692**
**DE-A-2 851 596**
**DE-A-2 907 185**
**DE-A-3 009 211**
**DE-A-3 143 047**
**FR-A-2 169 082**
**FR-A-2 491 236**
**FR-A-2 523 337**
**GB-A-2 041 611**

(73) Titulaire: **S.E.E.M. Société d'Etudes Electroniques et Mécaniques, 38, rue François- Dujardin, F-02470 Neuilly Saint- Front (Aisne) (FR)**

(72) Inventeur: **Moquet, Claude, Le Clotel, F-02470 Neuilly, Saint- Front (FR)**

(74) Mandataire: **Chevallier, Robert Marie Georges, Cabinet BOETTCHER 23, rue La Boétie, F-75008 Paris (FR)**

LIBER, STOCKHOLM 1989

EP 0 165 165 B1

## Description

La présente invention concerne un disque de stationnement électronique destiné à être monté dans les véhicules automobiles et à remplacer, ainsi, les parcmètres placés sur les voies publiques et qui sont soumis à des détériorations (voir for exemple FR-A-253 337). Ce disque a également pour but, de remplacer le traditionnel disque de stationnement, par un boitier électronique permettant d'obtenir le même résultat en actionnant une commande. Cette action est la manipulation d'un bouton-poussoir (voir pour exemple DE-A-2 851 596).

Ce problème est résolu par le dispositif ayant le caractéristiques de le revendication 1.

La notion de stationnement payant est assurée par le dispositif, par l'introduction d'une carte ou d'un ticket codé pouvant être acheté auprès d'un vendeur agréé et permettant la prise en compte, par le système, d'un crédit d'heures de stationnement. Ce crédit peut être augmenté par l'introduction de un ou plusieurs tickets ou cartes. Ces tickets ou cartes sont de réalisation simple et peu coûteuse, notamment à support magnétique codé ou à perforation, les méthodes de codage citées précédemment n'étant pas limitatives.

L'appareil se présente sous la forme d'un boitier dont une face, tournée vers l'extérieur du véhicule, possède un affichage indiquant soit l'heure limite de stationnement, soit le crédit de temps de stationnement. Une autre face du boitier tournée vers le conducteur, indique à celui-ci, soit l'heure réelle, soit les informations affichées sur la face tournée vers l'extérieur. Sur ce boitier, sont également implantées, de façon à être accessibles par le conducteur, les commandes de l'appareil. Les circuits logiques peuvent être remplacés par une puce ou un microprocesseur; afin de ne pouvoir être modifier par quiconque voudrait frauder, les circuits seraient protégés par moulage dans une résine qui les isolerait également de la chaleur, des chocs, des vibrations.

L'ensemble serait alimenté électriquement par la batterie du véhicule, par pile, batterie rechargeable intégrée.

Un mode de réalisation, donné ci-après à titre d'exemple purement indicatif non limitatif, permettra d'en dégager les avantages et les caractéristiques secondaires.

Il sera fait référence aux dessins annexés dans lesquels:

- la figure 1 est un schéma général du circuit électronique selon l'invention
- la figure 2 est un schéma du circuit de commande des afficheurs côté intérieur du véhicule
- la figure 3 est un schéma du circuit de commande des afficheure côté extérieur du véhicule
- la figure 4 est un schéma du circuit de prise en compte des informations sur tickets ou cartes
- la figure 5 est un schéma du circuit de report des données visualisées sur les afficheurs extérieurs, sur les afficheurs intérieurs
- la figure 6 est un schéma du circuit prenant en compte le code de la ville concernée

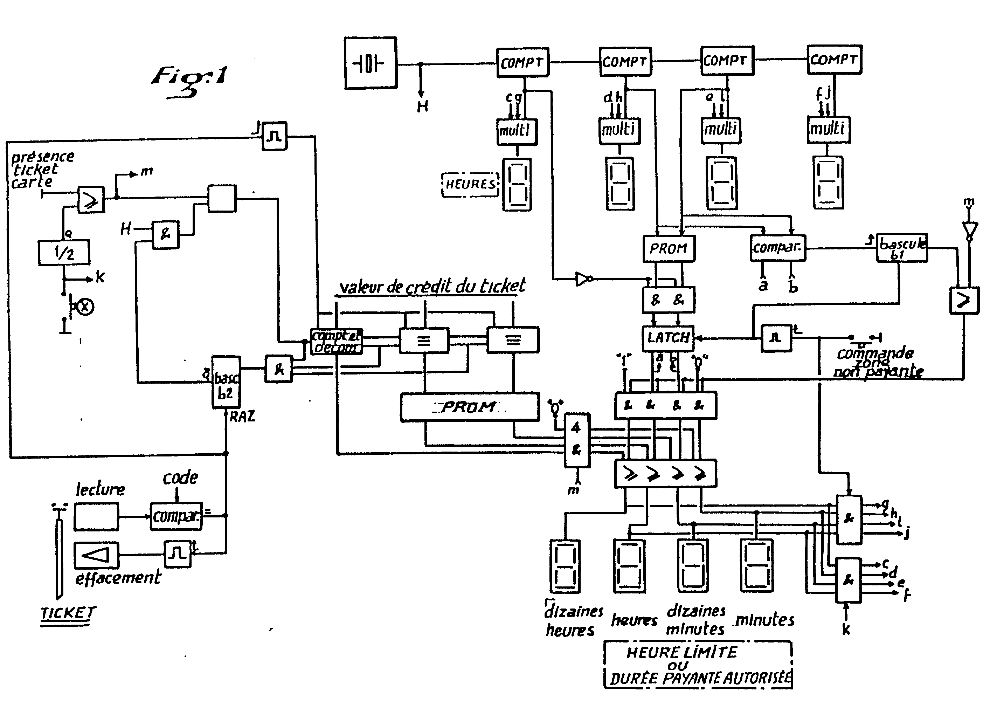

En se rapportant tout d'abord à la figure 1, on constate que le déplacement du véhicule est pris en compte pour remettre à 0 les registres mémorisant l'heure limite de stationnement. En effet, le stationnement en zône bleue comme en zône payante étant limité dans le temps, il est tenu compte d'une information émanant du déplacement du véhicule, pour revalider une nouvelle demande de stationnement faite à partir de l'organe de commande de l'impulsion. Cette validation n'est possible que si l'information dérivée de la rotation des roues est égale à un nombre aléatoire délivré par l'électronique. Cette disposition a pour but de rendre très difficile la simulation du déplacement. Dans le cas du stationnement payant, une totalisation des crédits de temps sera faite entre deux déplacements; cette totalisation sera comparée au temps limite admissible et si elle lui est numériquement supérieure, seul, ce dernier sera pris en compte pour l'extinction des afficheurs extérieurs; cette totalisation est remise à zéro lorsque le déplacement du véhicule est validé par le système. L'impulsion de demande de stationnement payant est faite à partir du poussoir "X".

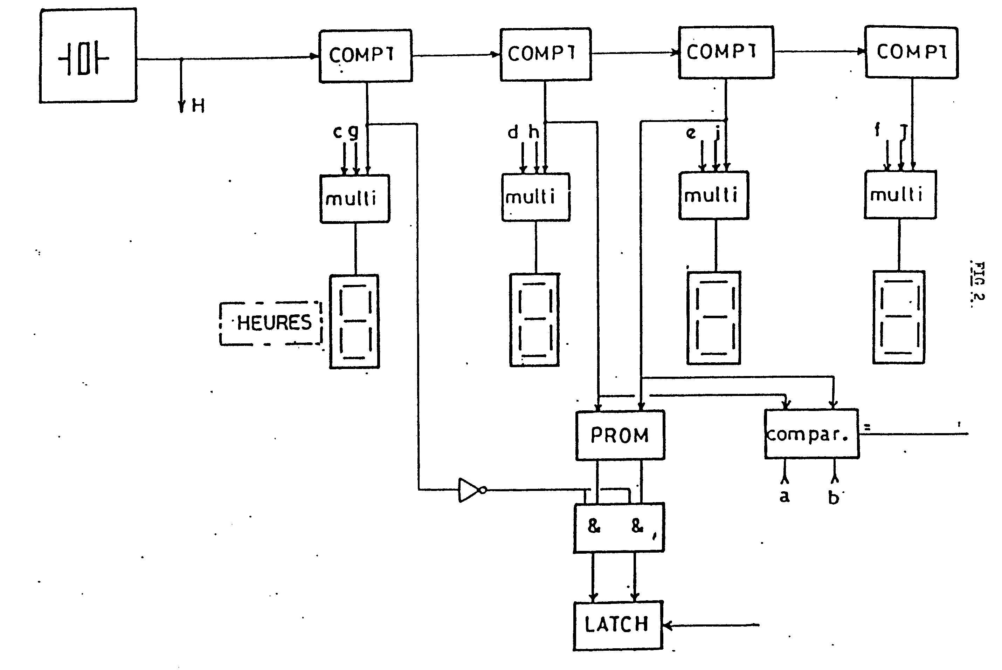

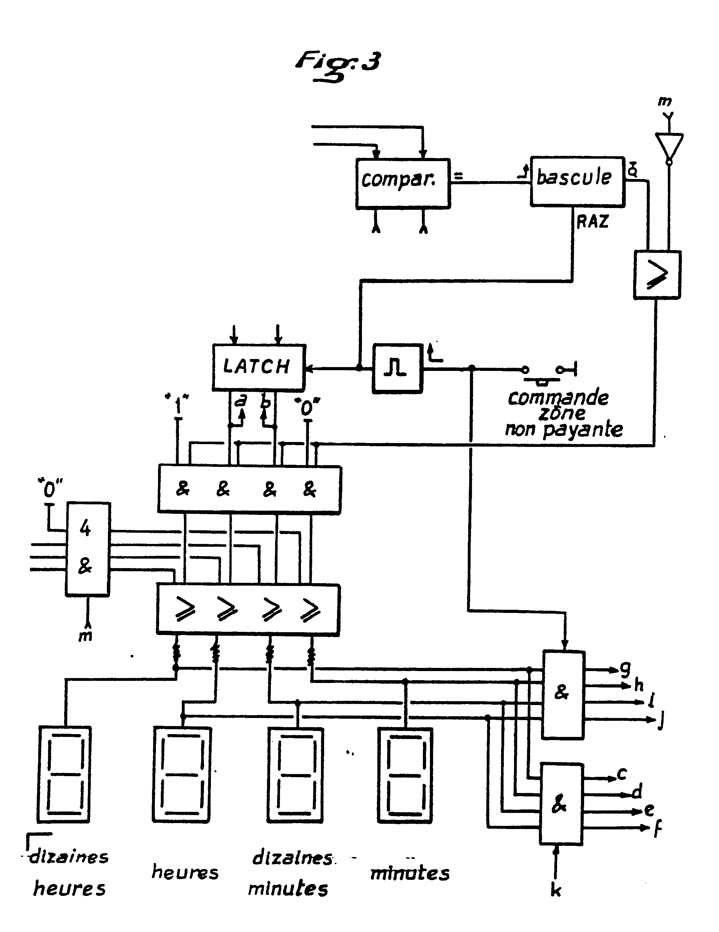

Selon les figures 2 et 3 une horloge à quartz pilote les circuits "COMPT", qui transforment les impulsions provenant de l'horloge en informations binaires. Le premier circuit compte jusqu'à 9, puis donne l'ordre au suivant de prendre en compte une impulsion. Le second circuit compte jusqu'à 6 puis donne l'ordre au suivant de prendre en compte une impulsion. Le troisième circuit compte jusqu'à 9 puis donne l'ordre au suivant de prendre en compte une impulsion. Le quatrième circuit compte jusqu'à 2; quand il a atteint cette valeur et que l'ensemble indique "2400", le tout repasse à 0. Les compteurs peuvent être attaqués par une ou plusieurs entrées de manière à remettre le système à l'heure.

Les circuits "MULTI" sont destinés à transmettre vers les afficheurs côté intérieur, soit l'heure réelle à partir des circuits "COMPT", soit durant le temps d'appui sur la commande de zône bleue l'heure limite de stationnement, soit durant le temps d'appui sur la commande de stationnement payant le crédit d'heure restant dans la limite de la durée de stationnement admissible.

Le circuit "PROM" transcrit l'heure réelle en heure limite. Le circuit "&" modifie la sortie de la "PROM" pour les heures au dela de 20 afin que, par exemple, 3, 13, 23, ne soient pas confondus, Les signaux traduisant l'heure limite arrivent ensuite dans la porte "LATCH" qui envoie ceux-ci vers les afficheurs et un comparateur (signaux a et b). Quand l'heure réelle et l'heure limite sont égales, le comparateur envoie une impulsion vers une bascule qui va commander la remise à zéro des afficheurs côté extérieur et leur extinction ou l'affichage "0000". La commande "zône bleue ou non payante" pourra être la même; la différence est faite par codage du signal par impulsion dans le circuit "Ω". L'impulsion attaque ensuite la porte "LATCH", L'entrée "m" sert à bloquer les informations d'heure limite dana le cas où l'on utilise le système payant.

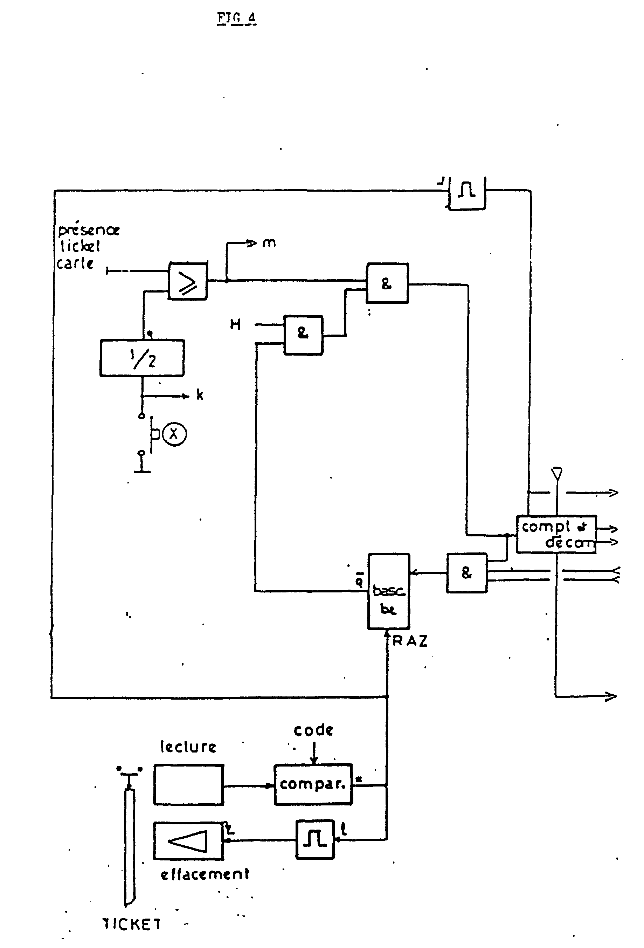

La gestion du stationnement payant est reprise par la figure 4. Un ticket ou une carte codée est introduit devant un dispositif de lecture. Le code ainsi lu est comparé à un code en mémoire avant prise en compte de la valeur du crédit. La présence du ticket ou de la carte autorise l'horloge "H" à effectuer le décomptage du temps crédité dans les compteurs/décompteurs. L'enlèvement du ticket ou de la carte entraîne l'arrêt du décomptage et la mise à 0 des afficheurs; le crédit restant est conservé en mémoire. La commande du poussoir "X" donne l'ordre de visualiser sur tous les afficheurs, le crédit d'heure restant. Lorsque tous les compteurs/décompteurs sont à 0, ils libèrent une impulsion qui fait monter une bascule qui arrête le décomptage et met les afficheurs côté extérieur à 0. Cette bascule ne sera remise à 1 qu'avec l'introduction d'un nouveau ticket ou carte et sous réserve que le temps limite de stationnement n'ait pas été atteint.

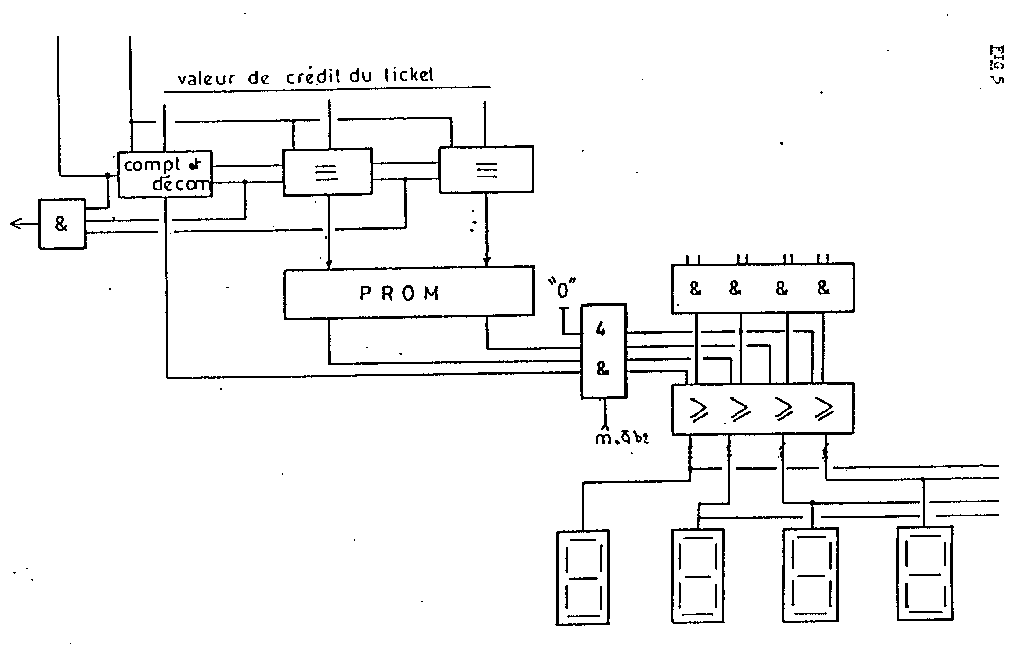

La figure 5 reprend le rôle joué par la "PROM". les compteurs/décompteurs vus précédemment, font un décomptage en minute. Il est donc nécessaire d'avoir un transcodage pour les heures, minutes de crédit restant. Celui-ci est assuré par la "PROM"

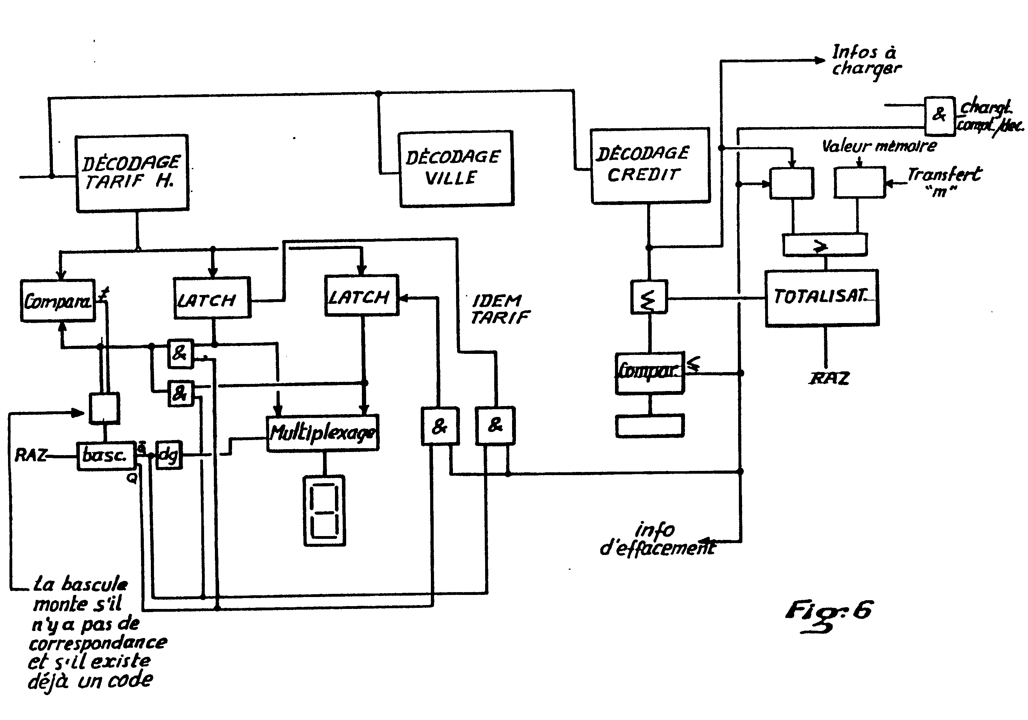

La figure 6 explicite les 3 fonctins suivantes:
- la comparaison de la totalisation de crédit avec le temps de stationnement limite admissible
- le codage de l'affichage en fonction du lieu d'achat du ticket ou de la carte
- le codage de l'affichage en fonction du prix de l'heure en vigueur

La valeur de crédit donnée par le ticket ou la carte est introduite dans une mémoire tampon. Cette valeur est additionnée à celle déjà dans le totalisateur. Si cette somme est inférieure au seuil admis sans déplacement du véhicule, le registre autorise le chargement dans les compteurs/décompteurs et stocke la nouvelle somme dans le totalisateur à la place de l'ancienne valeur qui y est contenue. Quand ces opérations ont été éxécutées par le système, l'ordre est donné d'effacer le ticket ou la carte, si c'est une solution magnétique qui a été retenue. Si la somme est supérieure, le registre n'autorise aucun transfert, ni effacement de ticket et il vide la mémoire tampon. Le totalisateur sera remis à 0 dès qu'il recevra le signal lui signifiant que le véhicule a bougé. Toute demande d'affichage du crédit restant ou toute introduction d'un nouveau crédit, provoquera le passage de la valeur correspondante dans le totalisateur, si celui-ci est à 0,

Au crédit d'heure en mémoire, est associé un code relatif à la localité pour laquelle le ticket ou la carte est valide. Si lors de la procédure d'introduction le code du ticket ou de la carte n'est pas identique à celui déjà enregistré par le système un signal d'erreur est généré qui peut commander par exemple une diode électroluminescente. La validation des informations contenues sur le ticket ou la carte écrasera les valeurs de crédit et de code de localité contenues en mémoire de système, sauf à posséder plusieurs mémoires libres affectées à la prise en compte de ce type d'informations.

A chaque ticket ou carte, peut être associé un code tarif qui pourra être visualisé. Si le code présent sur le ticket ou sur la carte n'est pas reconnu par le système, ce dernier génère un signal d'erreur et ne peut alors valider les autres données fournies par le support,

**Revendications**

1. Dispositif d'affichage et de décomptage pour le décomptage d'un temps prédéterminé ledit dispositif étant de conception entièrement électronique et statique et comprenant un circuit horloge, des circuits de calcul, des circuits comparateurs pour accomplir au choix l'une des fonctions suivantes:

"Disque de stationnement en zone bleue" où le temps prédéterminé est fixe, le dispositif affichant en permanence l'heure réelle, calculant et affichant l'heure limite de stationnement, comparant l'heure réelle et l'heure limite et, au moment de leur identité, déclenchant un signal d'avertissement de dépassement de l'heure limite;

"Parcmètre payant" où le temps prédéterminé à décompter est introduit à l'aide d'un support extérieur au dispositif portant un code pouvant être lu très rapidement, le dispositif affichant en permanence le crédit de temps de stationnement restant, et/ou calculant et affichant la somme dûe en fonction dudit temps prédéterminé et du ou des différents tarifs applicables pendant ledit temps prédéterminé.

2. Dispositif selon le revendications 1 utilisé à bord d'un véhicule pour le contrôle du temps de stationnement de ce dernier pour le décomptage d'un temps prédéterminé et l'affichage d'une heure limite d'arrêt dudit temps prédéterminé et avec lequel une nouvelle période de stationnement ne peut être programmée si le dispositif n'a pas détecté au préalable un déplacement de ce véhicule, caractérisé en ce que la détection du déplacement du véhicule est déterminée par le fait que le dispositif génère un nombre aléatoire auquel doit être égal un autre nombre enregistré par un détecteur de rotation des roues du véhicule.

3. Dispositif suivant l'une quelconque des revendications 1, 2, dont l'affichage tourné vers l'extérieur indique, selon un mode de fonctionnement sélectionné, le temps restant à passer ou l'heure à ne pas dépasser, caractérisé en ce que ledit mode de fonctionnement est sélectionné par l'action d'un bouton poussoir ou une autre commande similaire déclenchant une impulsion et en ce que, lorsque le temps décompté lors de l'arrêt du stationnement n'a pas couvert la totalité du crédit d'heures, le solde du crédit est stocké dans une mémoire vive pour pouvoir étre consommé ultérieurement quand cette fonction sera de nouveau sélectionnée et en ce que, lorsque le total du crédit d'heures est supérieur à un seuil prédéterminé, toute quantité de temps que l'on veut introduire est rejetée par un moyen d'interdiction de transfert vers le circuit permettant l'addition d'un nouveau temps au temps déjà mémorisé dans l'appareil.

4. Dispositif suivant l'une quelconque des revendications précédentes caractérisé en ce que le support extérieur est une carte ou un ticket d'encombrement réduit.

5. Dispositif suivant l'une quelconque des revendications précédentes caractérisé en ce que les informations codées sont enregistrées sur un support magnétique collé sur la carte ou le ticket.

6. Dispositif suivant l'une quelconque des revendications précédentes caractérisé en ce que les informations codées utilisées sont le repère de l'agglomération ou le ticket ou la carte sont valides, le montant du crédit d'heure, le repère du tarif en vigueur.

**Patentansprüche**

1. Anzeige- und Abwärtszählvorrichtung zum Abwärtszählen einer vorbestimmten Zeitspanne, wobei die vollkommen elektronisch und statisch ausgebildete Vorrichtung eine Zeitgeberschaltung sowie Rechen- und Komparatorschaltungen umfaßt zum wahlweisen Ausführen einer der folgenden Funktionen:

"Parkscheibe für den blauen Bereich", bei der die vorbestimmte Zeitspanne feststeht, wobei die Vorrichtung die tatsächliche Uhrzeit ständig anzeigt, die Parkendzeit berechnet und anzeigt, die tatsächliche Uhrzeit mit der Parkendzeit vergleicht und im Augenblick deren Übereinstimmung ein Warnsignal für das Überschreiten der Parkendzeit auslöst;

"Gebührenpflichtige Parkuhr", bei der die vorbestimmte abwärtszuzählende Zeitspanne mithilfe eines äußeren mit einem sehr schnell lesbaren Code versehenen Trägers in die Vorrichtung eingegeben wird, wobei die Vorrichtung das verbleibende Parkzeitguthaben ständig anzeigt und/oder die aufgrund der vorbestimmten Zeitspanne und des oder der während der vorbestimmten Zeitspanne geltenden unterschiedlichen Tarife fällige Summe berechnet und anzeigt.

2. Vorrichtung nach Anspruch 1, die in einem Fahrzeug zum Kontrollieren seiner Parkzeit verwendet wird, wobei eine vorbestimmte Zeitspanne abwärtsgezählt und eine die vorbestimmte Zeitspanne beendende Parkendzeit angezeigt wird, und mit der ein neuer Parkzeitabschnitt nur dann programmiert werden kann, wenn die Vorrichtung zuvor einen Standortwechsel dieses Fahrzeugs festgestellt hat, dadurch gekennzeichnet, daß die Feststellung des Standortwechsels des Fahrzeugs dadurch erfolgt, daß die Vorrichtung eine Zufallszahl erzeugt, der eine weitere von einem Detektor zum Erfassen der Radumdrehungen registrierte Zahl entsprechen muß.

3. Vorrichtung nach einem der Ansprüche 1 oder 2, bei der die nach außen weisende Anzeige je nach der gewählten Funktionsart die verbleibende auszuschöpfende Zeit oder den nicht zu überschreitenden Zeitpunkt anzeigt, daduch gekennzeichnet, daß die Funktionsart durch Betätigen eines Druckknopfes oder einer anderen gleichartigen Steuereinheit, bei der ein Impuls ausgelöst wird, ausgewählt wird und daß, wenn die abwärtsgezählte Zeit bei Beendigung des Parkvorgangs nicht das gesamte Zeitguthaben abgedeckt hat, das Restguthaben in einem Arbeitsspeicher gespeichert wird, um anschließend bei erneutem Wählen dieser Funktion wieder verbraucht werden zu können und daß, wenn das gesamte Zeitguthaben über eine vorbestimmte Grenze hinausgeht, die Übertragung einer neu eingegebenen Zeitspanne durch eine Transfersperre auf die Schaltung zurückgewiesen wird, durch welche die neue Zeit zu der bereits im Apparat gespeicherten Zeit hinzugezählt werden kann.

4. Vorrichtung nach einem der vorhergehenden Ansprüche, dadurch gekennzeichnet, daß der äußere Träger eine Karte oder ein Berechtigungsschein geringer Abmessung ist.

5. Vorrichtung nach einem der vorhergehenden Ansprüche, dadurch gekennzeichnet, daß die kodierten Daten auf einem auf die Karte oder den Berechtigungsschein geklebten Magnetträger gespeichert sind.

6. Vorrichtung nach einem der vorhergehenden Ansprüche, dadurch gekennzeichnet, daß die verwendeten kodierten Daten aus dem Code für die Stadt, in welcher die Karten und Berechtigungsscheine gültig sind, dem Zeitguthaben und dem Code für den geltenden Tarif bestehen.

**Claims**

1. Display and down-counting device for counting down a predetermined time, said device being of entirely electronic and static design and comprising a clock circuit, calculating circuits, and comparator circuits, for selectively performing one of the following functions:

'disc for parking in a blue zone', in which the predetermined time is fixed, the device permanently displaying the actual time, calculating and displaying the parking limit time, comparing the actual time and the limit time and, at the moment at which they are the same, triggering a signal advising that the limit time is exceeded; and

'paying parking meter' in which the predetermined time to be counted down is introduced by means of a support which is external to the device, bearing a code which can be read very rapidly, the device permanently displaying the remaining parking time credit and/or calculating and displaying the sum due in dependence on said predetermined time and the different tariff or tariffs applicable during said predetermined time.

2. A device according to claim 1 used on board on a vehicle for monitoring the parking time of the latter, for counting down a predetermined time and displaying a limit stop time for said predetermined time and with which a fresh period of parking cannot be programmed if the device has not first detected a movement of said vehicle, characterised in that the detection of movement of the vehicle is determined by the fact that the device generates a random number to which another number recorded by a detector for detecting rotary movement of the wheels of the vehicle must be equal.

3. A device according to either one of claims 1 and 2 wherein the outwardly directed display indicates, in accordance with a selected mode of operation, the time that still remains to pass or the time which is not to be exceeded, characterised in that said mode of operation is selected by the action of a pushbutton or another similar control which triggers a pulse and that when the time which is counted down at the end of the parking period has not covered the totality of the time credit, the balance of the credit is stored in a random access memory to be subsequently consumed when said function is reselected and that when the total of the time credit is greater than a predetermined threshold, any amount of time which is to be introduced is rejected by a means for prohibiting transfer to the circuit permitting the addition of a fresh time to the time which is already stored in the apparatus.

4. A device according to any one of the preceding claims characterised in that the external support is a card or a ticket of small size.

5. A device according to any one of the preceding claims characterised in that the coded information is recorded on a magnetic support which is stuck on the card or the ticket.

6. A device according to any one of the preceding claims characterised in that the items of coded information used are the identification of the built-up area in which the ticket or card are valid, the amount of time credit and identification of the applicable tariff.

Fig.1

FIG 2

## Fig. 3

EP 0 165 165 B1

FIG 4

FIG 5

valeur de crédit du ticket

PROM

"0"

m.d.b?

compt + décom

9

Fig: 6

DÉCODAGE TARIF H.

DÉCODAGE VILLE

DÉCODAGE CREDIT

Infos à charger

chargt. compt. élec.

Valeur mémoire

Transfert "m"

TOTALISAT.

RAZ

Compara.

LATCH

LATCH

IDEM TARIF

Multiplexage

RAZ

basc.

dg

Q

&

&

&

&

Compar.

info d'effacement

la bascule monte s'il n'y a pas de correspondance et s'il existe déjà un code

EP 0 165 165 B1